Europäisches Patentamt

European Patent Office

Office européen des brevets

(19)

(11) Publication number: **0 054 758**
**B1**

(12)

# EUROPEAN PATENT SPECIFICATION

(45) Date of publication of patent specification: 23.01.85

(51) Int. Cl.⁴: **C 09 K 5/06**

(21) Application number: **81109907.6**

(22) Date of filing: **26.11.81**

(54) **Hydrated MgCl2 or Mg(NO3)2/MgCl2 reversible phase change compositions.**

(30) Priority: **22.12.80 US 219009**
**22.12.80 US 219010**

(43) Date of publication of application:
**30.06.82 Bulletin 82/26**

(45) Publication of the grant of the patent:
**23.01.85 Bulletin 85/04**

(84) Designated Contracting States:
**AT BE CH DE FR GB IT LI NL SE**

(56) References cited:
**EP-A-0 029 504**
**DE-A-2 550 106**
**US-A-4 272 392**

(73) Proprietor: **THE DOW CHEMICAL COMPANY**
**Dow Center 2030 Abbott Road Post Office Box 1967**
**Midland Michigan 48640 (US)**

(72) Inventor: **Lane, George Ashel**
**3802 Wintergreen Drive**
**Midland Michigan 48640 (US)**
Inventor: **Rossow, Harold Everett**
**2888 Poseyville Road**
**Midland Michigan 48640 (US)**

(74) Representative: **Hann, Michael, Dr. et al**
**Patentanwälte Dr. Michael Hann Dr. H.-G. Sternagel Marburger Strasse 38**
**D-6300 Giessen (DE)**

EP 0 054 758 B1

Courier Press, Leamington Spa, England.

## Description

The invention relates to reversible liquid/solid phase change compositions comprising hydrated $MgCl_2$ and a nucleating agent. Furthermore the invention relates to a hydrated $MgCl_2$ composition further containing $Mg(NO_3)_2$ and additives to modify the supercooling properties of the liquid phase of the compositions.

DE—A—2 550 106 discloses a heat storage composition comprising $CaCl_2 \cdot 6H_2O$ and as a nucleating agent Barium hydroxide octahydrate, strontium hydroxide octahydrate, waterless barium hydroxide or waterless strontium hydroxide.

EP—A—0 029 504 is directed to reversible liquid/solid phase change compositions comprising hydrated $Mg(NO_3)_2$ and as nucleating additive one or more of $MgO$, $Mg(OH)_2$, $MgCO_3$, $CaO$, $Ca(OH)_2$, $CaCO_3$, $MgSO_4$, $CaSO_4$, $CuSO_4$, $NiSO_4$, $CoSO_4$, $ZnSO_4$, $Sr(OH)_2$, $SrCO_3$, $Ba(OH)_2$, $BaO$, $BaCO_3$, or $NaBO_2$, added to the composition in an effective amount to suppress the supercooling of the $Mg(NO_3)_2$ liquid phase to about 4°C or less.

$MgCl_2 \cdot 6H_2O$ undergoes a phase transition at 117°C releasing or alternately absorbing a substantial quantity of latent heat of fusion. As such, the material has advantageous properties for use as an encapsulated heat storage medium for use in conjunction with thermal energy storage systems, e.g., for absorption air conditioning and off peak electrical power heat storage applications. In order to improve the material for such applications, however, there is a need to develop additives or a series of additives to modify the supercooling properties of hydrated $MgCl_2$ compositions, and most advantageously, additives which are highly effective in a very small amount.

US—A—4 272 392 is directed to a reversible liquid/solid phase change composition comprising hydrated $Mg(NO_3)_2/MgCl_2$ and one of the group of $MgO$, $Mg(OH)_2$ and/or $NaBO_2$ added to the composition in an effective amount to suppress supercooling of the $Mg(NO_3)_2/MgCl_2$ liquid phase to 5°C or less.

The technical problem of the present invention is directed to improve the known liquid solid phase change compositions.

Said problem is solved by the solid phase change compositions according to claims 1 and 3 and the method of claim 7.

The subclaims describe preferred embodiments of the invention.

Hydrated $MgCl_2$ means reversible liquid/solid phase change compositions which, exclusive of any additives or impurities, contain in admixture from 43—49 weight percent $MgCl_2$, and the balance water (to 100 weight percent). Most preferred is a hydrate having a melt/freeze temperature of 117°C and prepared by admixing about 47 weight percent $MgCl_2$ with about 53 weight percent water. The predominate crystal form in compositions of the invention is the hexahydrate.

"Supercooling" refers to a discrepancy between the temperature at which freezing initiates and the thawing temperature of a given hydrated $MgCl_2$ composition, when cooled and heated under quiet conditions.

"Additive(s)" includes, in addition to the nucleating additives specified herein, precursors of such additives nondetrimental to the purposes of the invention.

The invention is the discovery of a new class of highly active nucleating additives for hydrated $MgCl_2$ or $MgCl_2/MgNO_3$ eutectic compositions. The invention particularly is a composition comprising hydrated $MgCl_2$, and which includes as a nucleating additive to such composition, one or more of $Ba(OH)_2$, $Sr(OH)_2$, $CaO$, $SrCO_3$, $BaO$, $Ca(OH)_2$, $Mg(OH)_2$, $MgO$, $Na_3AlF_6$ or $CaC_2O_4$ (calcium oxalate) added in an amount effective to suppress the supercooling properties of the hydrated $MgCl_2$ liquid phase. Sufficient amount of the additive(s) is present in the preferred practice to suppress supercooling to no greater than 2°C taken on an averaging basis over repeated cycles. The nucleating additive for the eutectic of hydrated $MgCl_2/Mg(NO_3)_2$ is selected from $Sr(OH)_2$, $Ca(OH)_2$, $CaO$, $BaO$ or mixtures thereof.

The effective amount of additive is determined by testing a given composition over repetitive phase change cycles. A given nucleating additive, if present in an insufficient amount may, for example, exhibit only temporary effectiveness. Such behavior is overcome by adding slightly greater amounts of that given additive.

The compositions hereof are ideally packaged in individual encapsulating means for use in the capacity of a heat storage medium. Exemplary of suitable and known encapsulating means for the heat storage compositions hereof, are water impervious foils of plastic/metal laminates. Also, closed cell plastic foams have been suggested in which the heat storage composition may be encapsulated within the cells of the foam structure, as illustrated, for example, in U.S. Patent No. 4,003,426.

Yet other useful encapsulating means are metal or plastic cans, such as inexpensive aerosol cans; metal or plastic pipe, such as extruded polyethylene pipe; and the like. Further details respecting such encapsulating means are given in Report Nos. ORO/5217-8 and NSF RANN SE C906 FR76 1, both available from the National Technical Information Service, Springfield, Virginia.

Example

The data of Table I below are generated by preparing hydrated $MgCl_2$ samples according to the

2

ratios indicated, and wherein the mixed samples of each specified ratio are placed into a 60 cm³ glass vial, which is then heated to about 130°C under agitation to achieve a uniform dispersion or admixture. A glass-encased thermocouple is inserted through the cap of each vial to measure temperature changes at the center of each sample prior to, during and after freezing. The cooling temperature is controlled and maintained within the range of about 20—25°C (room temperature). Sample No. 1, below, is a control sample of analytical grade $MgCl_2$ hydrated with deionized water.

TABLE I

| No. | Composition | | Additive Material | wt. % | No. of cycles | Average supercooling, °C |
|---|---|---|---|---|---|---|
| 1 | 46.1% $MgCl_2$+53.9% $H_2O$ | | None | — | 10 | 19.8 |
| 2 | " | " | $Ba(OH)_2$ | 0.5 | " | 0 |
| 3 | " | " | $Sr(OH)_2$ | " | " | 0 |
| 4 | " | " | CaO | " | " | 0 |
| 5 | " | " | $SrCO_3$ | " | " | 0 |
| 6 | " | " | BaO | " | " | 0.2 |
| 7 | " | " | $Ca(OH)_2$ | " | " | 0.6 |
| 8 | " | " | $Mg(OH)_2$ | " | " | 0.2 |
| 9 | " | " | MgO | " | " | 0 |
| 10 | " | " | $Na_3AlF_6$ | " | " | 1.6 |
| 11 | " | " | $CaC_2O_4$ | " | " | 0 |

The invention also contemplates the addition of $Mg(NO_3)_2$ to the $MgCl_2$ phase change compositions to produce a $Mg(NO_3)_2 \cdot 6H_2O/MgCl_2 \cdot 6H_2O$ eutectic which undergoes a phase transition at 59°C releasing or alternately absorbing a substantial quantity of latent heat of fusion. As such, the material has advantageous properties for use as an encapsulated heat storage medium for use in conjunction with solar energy systems for space or water heating applications. The material is particularly highlighted for such use by Yoneda and Takanashi "Eutectic Mixtures For Solar Heat Storage", Solar Energy, Vol. 21, pp. 61—63, 1978,

Hydrated $Mg(NO_3)_2/MgCl_2$ means reversible liquid/solid phase change compositions which, exclusive of any additives or impurities, contain in admixture from 25—45 weight percent $Mg(NO_3)_2$, from 10—25 weight percent $MgCl_2$, and from 40—50 weight percent water (to 100 weight percent). Most preferred is a eutectic mixture having a melt/freeze temperature of about 59°C, and prepared by admixing 34 weight percent $Mg(NO_3)_2$ and about 19 weight percent $MgCl_2$ in about 47 weight percent water. The predominate crystal forms in compositions of the invention are the hexahydrates.

The hydrated $Mg(NO_3)_2/MgCl_2$ composition include, as nucleating additives, one or more of $Sr(OH)_2$, $Ca(OH)_2$, CaO or BaO added in an amount effective to suppress the supercooling properties of the hydrated $Mg(NO_3)_2/MgCl_2$ liquid phase.

Sufficient of the additive(s) is present to suppress supercooling to no greater than about 2°C taken on an averaging basis over repeated cycles.

The data of Table II below are generated by preparing hydrated $Mg(NO_3)_2/MgCl_2$ samples according to the ratios indicated, and wherein the mixed samples of each specified ratio are placed into a 60 cm³ glass vial, which is then heated to above 70°C under agitation to achieve a uniform dispersion or admixture. A glass-encased thermocouple is inserted through the cap of each vial to measure temperature changes at the center of each sample prior to, during and after freezing. The cooling temperature is controlled and maintained within the range of about 20—25°C (room temperature). (Each composition is tested for supercooling over 10 freeze-thaw cycles, and average supercooling is reported in the Table.) Sample No. 1, below, is a control sample of analytical grade $Mg(NO_3)_2/MgCl_2$.

TABLE II

| Sample No. | Composition | Additive Material | Additive wt. % | Average supercooling ave. °C |
|---|---|---|---|---|
| 1 | 58.7% $Mg(NO_3)_2 \cdot 6H_2O$ + 41.3% $MgCl_2 \cdot 6H_2O$ | None | — | 14.0 |
| 2 | " | $Sr(OH)_2$ | 0.1 | 2.2 |
| 3 | " | $Sr(OH)_2$ | 0.5 | 0.4 |
| 4 | " | $Ca(OH)_2$ | 0.1 | 1.1 |
| 5 | " | $Ca(OH)_2$ | 0.5 | 0.2 |
| 6 | " | CaO | 0.1 | 0.8 |
| 7 | " | CaO | 0.5 | 1.1 |
| 8 | " | BaO | 0.1 | 1.1 |
| 9 | " | BaO | 0.5 | 1.2 |

It is understood that supercooling additives other than those disclosed in Tables I and II may be used in conjunction with the highly effective nucleating additives to prepare the improved $MgCl_2$ and $Mg(NO_3)_2/MgCl_2$ phase change compositions. While the data also illustrate that very little of the listed species of nucleating additives produce marked benefits (average supercooling less than 2°C) such additives, of course, may be incorporated in larger amounts, but preferably would not exceed the amount of 2.0 weight percent of the weight of the phase change composition.

**Claims**

1. A reversible liquid/solid phase change composition comprising hydrated $MgCl_2$ and a nucleating additive, characterized in that the hydrated $MgCl_2$ consists of 43—49 weight percent $MgCl_2$ and the balance is water to 100 weight percent and one or more of the group of $Ba(OH)_2$, $Sr(OH)_2$, CaO, $SrCO_3$, BaO, $Ca(OH)_2$, $Mg(OH)_2$, MgO, $Na_3AlF_6$ or $CaC_2O_4$ are added as nucleating additive to the composition in an amount effective to suppress average supercooling of the $MgCl_2$ liquid phase to 2°C or less.

2. The composition of claim 1 characterized in that the hydrated $MgCl_2$ consists of about 46 weight percent $MgCl_2$ and the balance is water to 100 weight percent.

3. A reversible liquid/solid phase change composition comprising hydrated $MgCl_2/Mg(NO_3)_2$ and a nucleating additive characterized in that the composition contains in admixture from 25—45 weight percent $Mg(NO_3)_2$, from 10—25 weight percent $MgCl_2$ and from 40—50 weight percent water (to 100 weight percent), the nucleating additive is selected from $Sr(OH)_2$, $Ca(OH)_2$, CaO, BaO or mixtures thereof and said nucleating additive being added in an amount sufficient to suppress average supercooling of the liquid phase to 2°C or less.

4. The composition of claim 3 characterized in that the hydrated $MgCl_2/Mg(NO_3)_2$ is an eutectic mixture having a phase transition at a temperature of about 59°C and consists of about 34 weight percent $Mg(NO_3)_2$ and about 19 weight percent $MgCl_2$ in about 47 weight percent water.

5. The composition of any of one of the preceding claims characterized in that the composition is hermetically contained within encapsulating means.

6. The composition of any of one of the preceding claims characterized in that the nucleating additive is present in the composition in an amount of not greater than 2.0 weight percent.

7. A method of preparing a liquid/solid phase change composition of suppressed supercooling properties comprising hydrated $MgCl_2$ and a nucleating additive characterized by admixing uniformly in such a composition hydrated $MgCl_2$ consisting of 43—49 weight percent $MgCl_2$ and the balance is water to 100 weight percent and one or more of $Ba(OH)_2$, $Sr(OH)_2$, CaO, $SrCO_3$, BaO, $Ca(OH)_2$, $Mg(OH)_2$, MgO, $AlF_6$ or $CaC_2O_4$ in an amount effective to suppress average supercooling of the $MgCl_2$ liquid phase to 2°C or less.

8. The method of claim 7 characterized in that the hydrated $MgCl_2$ consists of about 46 weight percent and the balance is water to 100 weight percent.

9. A method of preparing a liquid/solid phase change composition of suppressed supercooling properties comprising hydrated $MgCl_2/Mg(NO_3)_2$ and a nucleating additive characterized by adding to hydrated $MgCl_2$ an amount of $Mg(NO_3)_2$ and water to form a composition consisting of 25—45 weight

percent $Mg(NO_3)_2$ from 10—25 weight percent $MgCl_2$ and the balance is water to 100 weight percent and admixing uniformly one or more of $Sr(OH)_2$, $Ca(OH)_2$, $CaO$ or $BaO$ in an amount effective to suppress average supercooling of the $MgCl_2/Mg(NO_3)_s$ liquid phase to 2°C or less.

10. The method of claim 9 characterized in that the hydrated $MgCl_2/Mg(NO_3)_2$ mixture is prepared by about 34 weight percent $Mg(NO_3)_2$ and about 19 weight percent $MgCl_2$ in about 47 weight percent water.

11. The method of any of claims 7 to 10 characterized in that the nucleating additive is present in an amount not greater than 2.0 weight percent.

12. The method of any of the claims 7 to 11 characterized by encapsulating the composition in an encapsulating means.

**Patentansprüche**

1. Zusammensetzung, die im Phasenzustand reversibel zwischen fest und flüssig umkehrbar ist, die hydratisiertes $MgCl_2$ und einen keimbildenden Zusatz enthält, dadurch gekennzeichnet, daß sie aus 43—49 Gew.% $MgCl_2$ besteht und der Rest auf 100 Gew.% Wasser ist, und daß sie als keimbildenden Zusatz eine oder mehrere der nachfolgenden Verbindungen $Ba(OH)_2$, $Sr(OH)_2$, $CaO$, $SrCO_3$, $BaO$, $Ca(OH)_2$, $Mg(OH)_2$, $MgO$, $NaAlF_6$ oder $CaC_2O_4$ in der Zusammensetzung in einer solchen Menge enthält, daß die durchschnittliche Unterkühlung der flüssigen Phase von $MgCl_2$ 2°C oder weniger beträgt.

2. Zusammensetzung nach Anspruch 1, dadurch gekennzeichnet, daß das hydratisierte $MgCl_2$ aus etwa 46 Gew.% $MgCl_2$ besteht und der Rest auf 100 Gew.% Wasser ist.

3. Zusammensetzung deren Phasenzustand reversibel zwischen fest und flüssig umkehrbar ist, die hydratisiertes $MgCl_2/Mg(NO_3)_2$ und einen keimbildenden Zusatz enthält, dadurch gekennzeichnet, daß die Zusammensetzung eine Mischung von 25—45 Gew.% $Mg(NO_3)_2$, 10—25 Gew.% $MgCl_2$ und 40—50 Gew.% Wasser (auf 100 Gew.%) enthält und der keimbildende Zusatz $Sr(OH)_2$, $Ca(OH)_2$, $CaO$, $BaO$ oder Mischungen derselben ist und der keimbildende Zusatz in einer solchen Menge enthalten ist, daß die durchschnittliche Unterkühlung der flüssigen Phase 2°C oder weniger beträgt.

4. Zusammensetzung nach Anspruch 3, dadurch gekennzeichnet, daß das hydratisierte $MgCl_2/Mg(NO_3)_2$ eine eutektische Mischung ist, die eine Phasenumwandlung bei einer Temperatur von etwa 59°C aufweist, wobei die vorgenannte Mischung aus etwa 34 Gew.% $Mg(NO_3)_2$ und etwa 19 Gew.% $MgCl_2$ in etwa 47 Gew.% Wasser besteht.

5. Zusammensetzung nach einem der Ansprüche 1 bis 4, dadurch gekennzeichnet, daß die Zusammensetzung hermetisch in einem Einkapselungsmittel eingekapselt ist.

6. Zusammensetzung nach einem der Ansprüche 1 bis 5, dadurch gekennzeichnet, daß der keimbildende Zusatz in der Zusammensetzung in einer Menge von nicht größer als 2 Gew.% vorhanden ist.

7. Verfahren zum Herstellen einer Zusammensetzung, deren Phasenzustand reversibel zwischen fest und flüssig umkehrbar ist und mit verringertem Unterkühlungsverhalten, die hydratisiertes $MgCl_2$ und einen keimbildenden Zusatz enthält, dadurch gekennzeichnet, daß man in eine derartige Mischung von hydratisiertem $MgCl_2$, das aus 43—49 Gew.% $MgCl_2$ und Wasser bis auf 100 Gew.% besteht, eine oder mehrere der folgenden Verbindungen $Ba(OH)_2$, $Sr(OH)_2$, $CaO$, $SrCO_3$, $BaO$, $Ca(OH)_2$, $Mg(OH)_2$, $MgO$, $AlF_6$ oder $CaC_2O_4$ in einer solchen Menge gleichmäßig einmischt, daß die durchschnittliche Unterkühlung der flüssigen Phase von $MgCl_2$ 2°C oder weniger beträgt.

8. Verfahren nach Anspruch 7, dadurch gekennzeichnet, daß das verwendete hydratisierte $MgCl_2$ aus etwa 46 Gew.% $MgCl_2$ besteht und der Rest auf 100 Gew.% Wasser ist.

9. Verfahren zum Herstellen einer Zusammensetzung deren Phasenzustand reversibel zwischen fest und flüssig umkehrbar ist und mit verringertem Unterkühlungsverhalten, die hydratisiertes $MgCl_2/Mg(NO_3)_2$ und einen keimbildenden Zusatz enthält, dadurch gekennzeichnet, daß man zu dem hydratisierten $MgCl_2$ eine solche Menge an $Mg(NO_3)_2$ und Wasser hinzugibt, um eine Zusammensetzung zu erzeugen, die aus 25—45 Gew.% $Mg(NO_3)_2$, 10—25 Gew.% $MgCl_2$ und dem Rest auf 100 Gew.% aus Wasser besteht, und daß man gleichmäßig eine oder mehrere der folgenden Verbindungen $Sr(OH)_2$, $Ca(OH)_2$, $CaO$ oder $BaO$ in einer solchen Menge hinzugibt, daß die durchschnittliche Unterkühlung der flüssigen Phase von $MgCl_2/Mg(NO_3)_2$ 2°C oder weniger beträgt.

10. Verfahren nach Anspruch 9, dadurch gekennzeichnet, daß man die Mischung aus hydratisiertem $MgCl_2/Mg(NO_3)_2$ aus etwa 34 Gew.% $Mg(NO_3)_2$ und etwa 19 Gew.% $MgCl_2$ in etwa 47 Gew.% Wasser herstellt.

11. Verfahren nach einem der Ansprüche 7 bis 10, dadurch gekennzeichnet, daß der keimbildende Zusatz in einer Menge von nicht größer als 2 Gew.% vorhanden ist.

12. Verfahren nach einem der Ansprüche 7 bis 11, dadurch gekennzeichnet, daß man die Zusammensetzung in einem Einkapselungsmittel einkapselt.

**Revendications**

1. Composition à changement réversible de phase liquide/solide comprenant du $MgCl_2$ hydraté et un additif formateur de germes, caractérisée par le fait que le $MgCl_2$ hydraté se compose de 43—49% en poids de $MgCl_2$, le restant étant de l'eau pour compléter à 100% en poids et qu'un ou plusieurs composés choisis parmi le groupe comprenant $Ba(OH)_2$, $Sr(OH)_2$, $CaO$, $SrCO_3$, $BaO$, $Ca(OH)_2$, $Mg(OH)_2$, $MgO$, $Na_3AlF_6$ ou $CaC_2O_4$ sont ajoutés comme additifs formateurs de germes à la composition en une quantité efficace pour abaisser la valeur moyenne de la surfusion de la phase liquide de $MgCl_2$ à 2°C ou moins.

2. Composition selon la revendication 1, caractérisée par le fait que le $MgCl_2$ hydraté se compose d'environ 46% en poids de $MgCl_2$, le restant étant de l'eau pour compléter à 100% en poids.

3. Composition à changement réversible de phase liquide/solide comprenant du $MgCl_2/Mg(NO_3)_2$ hydraté et un additif formateur de germes, caractérisée par le fait que la composition contient en mélange de 25—45% en poids de $Mg(NO_3)_2$, de 10—25% en poids de $MgCl_2$ et de 40—50% en poids d'eau (pour compléter à 100% en poids), que l'additif formateur de germes est choisi parmi $Sr(OH)_2$, $Ca(OH)_2$, $CaO$, $BaO$ ou leurs mélanges et ledit additif formateur de germes est ajouté en une quantité suffisante pour rabaisser la valeur moyenne de surfusion de la phase liquide à 2°C ou moins.

4. Composition selon la revendication 3, caractérisée par le fait que le $MgCl_2/Mg(NO_3)_2$ hydraté est un mélange eutectique ayant une transition de phase à une température de 59°C et se compose d'environ 34% en poids de $Mg(NO_3)_2$ et environ 19% en poids de $MgCl_2$ dans 47% en poids d'eau.

5. Composition selon l'une quelconque des revendications précédentes, caractérisée par le fait que la composition est hermétiquement contenue dans un moyen d'encapsulation.

6. Composition selon l'une quelconque des revendications précédentes, caractérisée par le fait que l'additif formateur de germes est présent dans la composition en une quantité qui n'est pas supérieure à 2,0% en poids.

7. Procédé pour préparer une composition à changement de phase liquide/solide dont les propriétés de surfusion sont supprimées, comprenant du $MgCl_2$ hydraté et un additif formateur de germes, caractérisé par le fait que l'on mélange uniformément dans une telle composition, du $MgCl_2$ hydraté se composant de 43—49% en poids de $MgCl_2$, le restant étant de l'eau pour compléter à 100% en poids et un ou plusieurs composés choisis parmi $Ba(OH)_2$, $Sr(OH)_2$, $CaO$, $SrCO_3$, $BaO$, $Ca(OH)_2$, $Mg(OH)_2$, $MgO$, $AlF_6$ ou $CaC_2O_4$ en une quantité efficace pour abaisser la valeur moyenne de la surfusion de la phase liquide de $MgCl_2$ à 2°C ou moins.

8. Procédé selon la revendication 7, caractérisé par le fait que le $MgCl_2$ hydraté se compose d'environ 46% en poids, le restant étant de l'eau pour compléter à 100% en poids.

9. Procédé de préparation d'une composition à changement de phase liquide/solide dont les propriétés de surfusion sont réduites, comprenant du $MgCl_2/Mg(NO_3)_2$ hydraté et un additif formateur de germes, caractérisé par le fait que l'on ajoute au $MgCl_2$ hydraté une quantité de $Mg(NO_3)_2$ et de l'eau de façon à former une composition comprenant 25—45% en poids de $Mg(NO_3)_2$, 10—25% en poids de $MgCl_2$, le restant étant de l'eau pour compléter à 100% en poids et on y mélange uniformément un ou plusieurs composés choisis parmi $Sr(OH)_2$, $Co(OH)_2$, $CaO$ ou $BaO$ en une quantité efficace pour abaisser la valeur moyenne de la surfusion de la phase liquide de $MgCl_2/Mg(NO_3)_2$ à 2°C ou moins.

10. Procédé selon la revendication 9, caractérisé par le fait que l'on prépare le mélange de $MgCl_2/Mg(NO_3)_2$ hydraté à partir d'environ 34% en poids de $Mg(NO_3)_2$ et environ 19% en poids de $MgCl_2$ dans environ 47% en poids d'eau.

11. Procédé selon l'une quelconque des revendications 7 à 10, caractérisé par le fait que l'additif formateur de germes est présent en une quantité qui n'est pas supérieure à 2,0% en poids.

12. Procédé selon l'une quelconque des revendications 7 à 11, caractérisé par le fait que l'on encapsule la composition dans un moyen d'encapsulation.